# FASCICULE DE BREVET EUROPEEN

(11) **EP 3 554 848 B1**
(45) Date de publication et mention de la délivrance du brevet: **03.02.2021**
(21) Numéro de dépôt: 17816984.3
(22) Date de dépôt: 04.12.2017
(51) Int. Cl.: B60C 1/00, C08K 5/3415, C08F 136/08, C08C 19/28, C08F 8/00

(54) **PNEUMATIQUE COMPORTANT UNE COMPOSITION DE CAOUTCHOUC COMPRENANT UN POLYMERE PORTEUR D'UN GROUPEMENT DIENE CONJUGUE RETICULE PAR UN DIENOPHILE**
REIFEN MIT EINER KAUTSCHUKZUSAMMENSETZUNG MIT EINEM POLYMER MIT EINER DURCH EIN DIENOPHILEN VERNETZTEN KONJUGIERTEN DIENGRUPPE
TYRE COMPRISING A RUBBER COMPOSITION COMPRISING A POLYMER BEARING A CONJUGATED DIENE GROUP CROSSLINKED BY A DIENOPHILE

(30) Priorité: 15.12.2016 FR 1662520
(43) Date de publication de la demande: 23.10.2019
(73) Titulaire: Compagnie Générale des Etablissements Michelin, 63000 Clermont-Ferrand (FR)
(72) Inventeur: FLEURY, Etienne, 63040 Clermont-Ferrand Cedex 9 (FR); SCHNELL, Benoît, 63040 Clermont-Ferrand Cedex 9 (FR); JASSELIN, Adeline, 63040 Clermont-Ferrand Cedex 9 (FR)
(74) Mandataire: Le Cam, Véronique Marie Christine
(86) Numéro de dépôt international: PCT/FR2017/053379
(87) Numéro de publication internationale: WO 2018/109312

(56) Documents cités:
- EP-A1- 2 423 239
- US-A1- 2002 086 952

## Description

La présente invention est relative aux pneumatiques munis de compositions de caoutchouc, en particulier de compositions de caoutchouc à base de polymères comprenant des fonctions diènes conjugués.

Depuis que les économies de carburant et la nécessité de protéger l'environnement sont devenues une priorité, il s'est avéré nécessaire de produire des pneumatiques ayant une résistance au roulement aussi faible que possible. Ceci a été rendu possible notamment grâce à l'utilisation, dans les compositions de caoutchouc, de charges inorganiques spécifiques, capables de rivaliser du point de vue renforçant avec une charge organique telle que le noir de carbone conventionnel de grade pneumatique, tout en offrant à ces compositions une hystérèse plus faible, synonyme d'une plus basse résistance au roulement pour les pneumatiques les comportant.

Diminuer davantage la résistance au roulement demeure dans le contexte économique et écologique actuel un souci permanent malgré les bas niveaux atteints respectivement tant avec les charges inorganiques spécifiques qualifiées de "renforçantes" qu'avec un noir de carbone. De nombreuses pistes ont déjà été explorées pour abaisser encore l'hystérèse des compositions de caoutchouc renforcées avec de telles charges renforçantes. Néanmoins, il demeure toujours intéressant de poursuivre un objectif de baisse de la consommation des véhicules, baisse qui peut résulter d'une amélioration des propriétés hystérétiques des compositions de pneumatiques.

Par ailleurs, il est connu, et habituel depuis de très nombreuses années, d'utiliser dans des pneumatiques des compositions de caoutchouc dont la matrice élastomérique est réticulée au soufre, cette réticulation est alors nommée vulcanisation. Le système de vulcanisation classique combine du soufre moléculaire et au moins un accélérateur de vulcanisation. Cependant, il est connu qu'un tel système pénalise la mise en oeuvre de la composition avant cuisson par le phénomène du grillage. On rappelle que le phénomène dit de "grillage" conduit rapidement, au cours de la préparation des compositions de caoutchouc, à des vulcanisations prématurées (*"scorching"*), à des viscosités à l'état cru très élevées, en fin de compte à des compositions de caoutchouc quasiment impossibles à travailler et à mettre en oeuvre industriellement.

Par conséquent, les systèmes de vulcanisation ont été perfectionnés au fil des années, en association avec les procédés de préparation des compositions de caoutchouc afin de maitriser les inconvénients évoqués ci-dessus. Ainsi, les compositions sont souvent complexes et comprennent en plus du soufre moléculaire, ou d'un agent donneur de soufre moléculaire, des accélérateurs de vulcanisation, des activateurs, et éventuellement des retardateurs de vulcanisation. A présent, il serait intéressant pour les manufacturiers de trouver des systèmes de réticulation aussi performants que la vulcanisation, tout en simplifiant les compositions et leur préparation.

Par ailleurs, il est également connu d'utiliser dans certaines parties des pneumatiques, des compositions de caoutchouc présentant une forte rigidité lors de faibles déformations du pneumatique (cf WO 02/10269). La résistance aux faibles déformations est une des propriétés que doit présenter un pneumatique pour répondre aux sollicitations auxquelles il est soumis.

Cette rigidification peut être obtenue en augmentant le taux de charge renforçante ou en incorporant certaines résines renforçantes dans les compositions de caoutchouc constitutives des parties du pneumatique.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant à des fins économiques et environnementales.

Poursuivant leurs recherches, les demanderesses ont à présent trouvé que des compositions pour pneumatiques particulières pouvaient être préparées de manière simplifiée par rapport aux compositions classiques, et ce en conservant voire en améliorant leurs propriétés de rigidité.

En conséquence, un premier objet de l'invention concerne un pneumatique comportant une composition de caoutchouc à base d'au moins une charge renforçante, un polymère comprenant des fonctions diène conjugué, et un système de réticulation dudit polymère comprenant un poly-diénophile de formule générale (I) 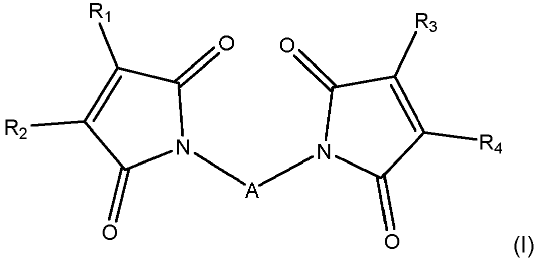 dans laquelle
- A représente une liaison covalente ou un groupement hydrocarboné comportant au moins 1 atome de carbone, éventuellement substitué et éventuellement interrompu par un ou plusieurs hétéroatomes,
- R₁, R₂, R₃ et R₄ représentent indépendamment les uns des autres des groupements identiques ou différents choisis parmi l'atome d'hydrogène et les groupements hydrocarbonés, R₁ et R₂ d'une part et R₃ et R₄ d'autre part pouvant former ensemble avec les atomes de carbone du cycle auxquels ils se rattachent, un cycle.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### I. Composition des pneumatiques de l'invention

Le pneumatique selon l'invention comporte une composition de caoutchouc à base d'au moins une charge renforçante, un polymère comprenant des fonctions diène conjugué, et un système de réticulation dudit polymère comprenant un poly-diénophile de formule générale (I).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression "équivalent molaire", bien connue de l'homme du métier, il faut entendre le quotient entre le nombre de moles du composé concerné et le nombre de moles du composé de référence. Ainsi, 2 équivalents d'un composé B par rapport à un composé A représentent 2 moles du composé B lorsqu'1 mole du composé A est utilisée.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères.

Au contraire, un composé « minoritaire » est un composé qui ne représente pas la fraction massique la plus grande parmi les composés du même type.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### I.1. Polymère comprenant des fonctions diène conjugué

Par polymère comprenant des fonctions diène conjugué, on entend tout type de polymère au sens connu de l'homme de l'art, qu'il soit de nature thermoplastique, élastomérique, que ce soit une résine ou un élastomère, à condition que ce polymère soit porteur de groupes fonctionnels diène conjugué.

Les compositions de l'invention peuvent contenir un seul polymère comprenant des fonctions diène conjugué ou un mélange de plusieurs polymères comprenant des fonctions diène conjugué.

Le polymère comprenant des fonctions diène conjugué peut être de préférence choisi dans le groupe constitué par les polymères thermoplastiques, les résines, les élastomères et les mélanges de ces derniers. Préférentiellement, le polymère comprenant des fonctions diène conjugué est choisi dans le groupe constitué par les polymères thermoplastiques comprenant des fonctions diène conjugué, les élastomères, comprenant des fonctions diène conjugué et leurs mélanges.

La fonction appelée « diène conjugué » est bien connue de l'homme de l'art et implique sur le polymère la présence de deux doubles liaisons carbone-carbone successives, qui peuvent être localisées soit le long de la chaîne du polymère, soit sur une ramification de la chaîne polymérique auquel cas on parlera de fonction pendante.

Cette fonction diène conjugué peut notamment être des cycles de type furanes (c'est-à-dire le furane et ses dérivés substitués), anthracènes (c'est-à-dire l'anthracène et ses dérivés substitués), cyclopentadiènes (c'est-à-dire le cyclopentadiène et ses dérivés substitués, notamment fulvènes), pyrroles (c'est-à-dire le pyrrole et ses dérivés substitués), ou encore thiophènes (c'est-à-dire le thiophène et ses dérivés substitués).

Ainsi, de préférence pour l'invention, la fonction diène conjugué est choisie dans le groupe constitué par les furanes (c'est-à-dire le furane et ses dérivés substitués), les anthracènes (c'est-à-dire l'anthracène et ses dérivés substitués), les cyclopentadiènes (c'est-à-dire le cyclopentadiène et ses dérivés substitués, notamment fulvènes), les pyrroles (c'est-à-dire le pyrrole et ses dérivés substitués), les thiophènes (c'est-à-dire le thiophène et ses dérivés substitués) et leurs mélanges.

Plus préférentiellement, la fonction diène conjugué est choisie dans le groupe constitué par les furanes (c'est-à-dire le furane et ses dérivés substitués), les anthracènes (c'est-à-dire l'anthracène et ses dérivés substitués), les cyclopentadiènes (c'est-à-dire le cyclopentadiène et ses dérivés substitués, notamment fulvènes) et leurs mélanges.

De manière plus préférée, la fonction diène conjugué est choisie dans le groupe constitué par le furane l'anthracène, le cyclopentadiène, le fulvène et leurs mélanges.

Ces polymères comprenant des fonctions diène conjugué peuvent être obtenus par la polymérisation de monomères présentant de telles fonctions diène conjugué, lorsque la réaction de polymérisation n'implique pas ces fonctions diène conjugué et les laisse intactes à l'issue de la polymérisation. Ces monomères peuvent être par exemple des (méth)acrylates substitués tels que par exemple le furfurylméthacrylate.

Ces polymères comprenant des fonctions diène conjugué peuvent également être obtenus par une fonctionnalisation post-polymérisation, par tout moyen permettant d'obtenir une fonction diène conjugué telle que décrite plus haut sur le polymère.

De préférence, le polymère comprenant des fonctions diène conjugué est un élastomère comprenant des fonctions diène conjugué.

Par élastomère ou caoutchouc (les deux termes étant de manière connue synonymes et interchangeables) comprenant des fonctions diène conjugué, on entend tout type d'élastomère au sens connu de l'homme de l'art, qu'il s'agisse d'un homopolymère ou d'un copolymère à bloc, statistique ou autre, ayant des propriétés élastomériques, comprenant des groupes fonctionnels diène conjugué, tels que définis plus haut.

Les élastomères sont, de manière connue, solides à température ambiante (20°C); on entend par solide toute substance n'ayant pas la capacité de prendre à terme, au plus tard au bout de 24 heures, sous le seul effet de la gravité et à température ambiante (20°C), la forme du récipient qui la contient.

La Tg des élastomères décrits ci-dessous est mesurée de manière connue par DSC (Differential Scanning Calorimetry), par exemple et sauf indications différentes spécifiées dans la présente demande, selon la norme ASTM D3418 de 1999.

L'élastomère comprenant des fonctions diène conjugué peut être choisi dans le groupe constitué par les élastomères diéniques comprenant des groupes fonctionnels diène conjugué, les élastomères oléfiniques comprenant des groupes fonctionnels diène conjugué et les mélanges de ces derniers. Préférentiellement, l'élastomère comprenant des fonctions diène conjugué est choisi parmi les élastomères oléfiniques comprenant des groupes fonctionnels diène conjugué et les mélanges de ces derniers. Selon une autre variante préférentielle de l'invention, l'élastomère comprenant des fonctions diène conjugué est choisi parmi les élastomères diéniques comprenant des groupes fonctionnels diène conjugué et les mélanges de ces derniers.

Par élastomère du type oléfinique comprenant des fonctions diène conjugué, on rappelle que doit être entendu un élastomère comprenant des groupes fonctionnels diène conjugué, et dont la chaine élastomérique est une chaine carbonée comportant majoritairement des unités monomériques oléfine notés O (taux molaire supérieur à 50%). Plus précisément, le taux molaire de O est compris entre 50 et 95%, préférentiellement entre 65 et 85% Cet élastomère oléfinique est donc un copolymère comportant également 5 à 50% molaire de motifs non oléfiniques, c'est-à-dire différents de O. Ces motifs non oléfiniques sont constitués en partie ou en totalité par des motifs comprenant des groupes fonctionnels diène conjugué, notés R, nécessaires aux besoins de l'invention. Dans le cas où les motifs non oléfiniques ne sont pas intégralement des motifs R, d'autres motifs, non diéniques et non oléfiniques, notés A' sont présents dans la chaine carbonée de telle manière que le taux molaire de R+A' est strictement inférieur à 50%.

Les monomères O peuvent provenir de toute oléfine connue par l'homme de l'art, comme par exemple, l'éthylène, le propylène, le butylène, l'isobutylène, ces monomères étant éventuellement substitués par des groupes alkyles linéaires ou ramifiés.

Préférentiellement O est un motif éthylène [-CH2-CH2-], et dans ce cas préférentiel, l'élastomère oléfinique comprenant des fonctions diène conjugué est un élastomère éthylénique comprenant des fonctions diène conjugué, ce qui permet d'améliorer encore plus le compromis entre les performances de rigidité et d'hystérèse dans les compositions pour pneumatique.

Une caractéristique essentielle de l'élastomère oléfinique comprenant des fonctions diène conjugué utile aux besoins de l'invention, est qu'il est fonctionnalisé, comprenant des groupes fonctionnels diène conjugué.

La fonction diène conjugué peut être portée directement par le squelette carboné, ou peut également être pendante et est alors déjà présente dans un monomère intervenant dans la copolymérisation avec l'oléfine (ce monomère peut être, par exemple, le (méth)acrylate de furfuryle).

Le taux (% molaire) de motif R dans les élastomères oléfiniques comprenant des groupes fonctionnels diène conjugué précédemment décrits peut varier dans une large part selon les modes de réalisation particuliers de l'invention, de préférence dans un domaine de 0,1% à 50%, préférentiellement dans un domaine de 0,2% à 50%, plus préférentiellement dans un domaine de 0,2% à 30%, mieux, dans un domaine de 0,2 à 20%. Quand le taux de motifs R est inférieur à 0,1%, l'effet technique visé risque d'être insuffisant tandis qu'au-delà de 50%, l'élastomère ne serait plus majoritairement oléfinique.

Lorsque les motifs non oléfiniques ne sont pas constitués en totalité par des motifs R comprenant des fonctions diène conjugué, d'autres motifs non oléfiniques A' sont présents dans la chaine, de façon à ce que le taux molaire total représenté par les monomères O, R et A' soit égal à 100%. Les monomères non oléfiniques utiles à la préparation des élastomères oléfiniques comprenant des groupes fonctionnels diène conjugué peuvent être choisis parmi les monomères non oléfiniques ne conduisant pas à des insaturations et les monomères qui une fois polymérisés conduisent à des insaturations portées par la chaine élastomère (autres que des monomères diéniques).

Les monomères non oléfiniques ne conduisant pas à des insaturations sont essentiellement des monomères vinyliques et acryliques/méthacryliques. Par exemple, de tels monomères peuvent être choisis parmi le styrène, le vinyle acétate, l'alcool vinylique, l'acrylonitrile, l'acrylate de méthyle, le méthacrylate de méthyle, ces monomères étant éventuellement substitués par des groupes alkyles, aryles ou d'autres groupes fonctionnalisés.

Par exemple également, les monomères non diéniques utiles à la préparation des élastomères de type oléfiniques porteurs d'insaturations par copolymérisation sont tous ceux connus de l'homme de l'art pour former des élastomères insaturés, tels que par exemple le méthacrylate de dicyclopentadiényloxyéthyle.

Les élastomères oléfiniques comprenant des groupes fonctionnels diène conjugué présentent une Tg dans la très grande majorité des cas qui est négative (c'est-à-dire inférieure à 0°C).

Les élastomères oléfiniques comprenant des groupes fonctionnels diène conjugué présentent une masse molaire moyenne en nombre (Mn) d'au moins 10 000 g/mol, préférentiellement d'au moins 15 000 g/mol et d'au plus 1 500 000 g/mol. L'indice de polydispersité Ip, égal à Mw/Mn (Mw étant la masse molaire moyenne en poids), est compris entre 1,05 et 11,00.

De préférence, et en résumé, l'élastomère oléfinique comprenant des fonctions diène conjugué est donc un copolymère possédant au moins 50% (en moles) d'unités monomériques oléfine, et avec un nombre d'unités monomériques différentes supérieur ou égal à 2, préférentiellement de 2 à 5, et plus préférentiellement de 2 ou 3. Ce copolymère pourra être obtenu par copolymérisation.

Par élastomère du type diénique comprenant des fonctions diène conjugué, on rappelle que doit être entendu un élastomère, qu'il soit naturel ou synthétique, qui est issu au moins en partie (i.e. un homopolymère ou un copolymère) de monomères diènes (monomères porteurs de deux doubles liaisons carbone-carbone, conjuguées ou non), ce polymère étant fonctionnalisé diène conjugué, c'est-à-dire comprenant des fonctions diène conjugué.

Ces définitions étant données, on entend plus particulièrement par élastomère diénique susceptible d'être utilisé dans les compositions conformes à l'invention :
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - tout copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - tout copolymère d'isobutène et d'isoprène (caoutchouc butyle), ainsi que les versions halogénées, en particulier chlorées ou bromées, de ce type de copolymère ;
(e) - tout copolymère obtenu par copolymérisation d'un ou plusieurs diènes conjugués avec l'éthylène, une a-monooléfine aliphatique acyclique ayant 3 à 18 atomes de carbone ou leur mélange comme par exemple ceux décrits dans le document WO 2005028526, WO 2004035639 et WO 2007054224 ;
(f) - tout copolymère obtenu par copolymérisation d'un ou plusieurs diènes conjugués avec un ester de l'acide (méth)acrylique, le (méth)acrlylonitrile ou leur mélange.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

A titre d'a-monooléfines aliphatiques acycliques ayant 3 à 18 atomes de carbone, on peut citer le propène, le butène, l'hexène, l'octène, l'hexadécène.

A titre d'esters de l'acide (méth)acrylique conviennent par exemple les (méth)acrylates d'alkyle ayant 1 à 12 atomes de carbone tels que le (méth)acrylate de méthyle, d'éthyle, de propyle, de butyle, d'hexyle, d'octyle.

Préférentiellement, l'élastomère diénique est choisi dans le groupe constitué par les polybutadiènes, les polyisoprènes, les copolymères de butadiène, les copolymères d'isoprène et leurs mélanges. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'éthylène et de butadiène (EBR).

Une caractéristique essentielle de l'élastomère diénique comprenant des fonctions diène conjugué utile aux besoins de l'invention, est qu'il est fonctionnalisé, porteur de groupes fonctionnels diène conjugué.

Les fonctions diène conjugué présentes dans l'élastomère diénique peuvent être obtenues par tout moyen. Par exemple, l'élastomère peut être préparé par modification d'un premier élastomère diénique par un agent de modification qui porte un motif diène conjugué tel que défini plus haut, et une fonction réactive vis-à-vis des doubles liaisons carbone-carbone du premier élastomère diénique. Le motif diène conjugué peut être relié directement ou par l'intermédiaire d'un espaceur à la fonction réactive. Par espaceur, on entend un atome ou un groupe d'atomes.

Selon une variante préférentielle de l'invention, le polymère comprenant des fonctions diène conjugué est un élastomère diénique comprenant des fonctions diène conjugué. Dans cette variante préférée, l'élastomère diénique est préférentiellement un polyisoprène, un polybutadiène, un copolymère de butadiène-styrène (SBR), un copolymère d'éthylène et de butadiène (EBR). Dans cette variante préférée, la fonction diène conjuguée est portée par un groupement furane, anthracène, cyclopentadiène, fulvène, pyrrole, ou encore thiophène. Plus préférentiellement, la fonction diène conjuguée est portée par un groupement furane, anthracène, cyclopentadiène, ou fulvène. Très préférentiellement, la fonction diène conjuguée est portée par un groupement furane ou anthracène, et plus préférentiellement encore anthracène.

Selon un mode préférentiel de réalisation de l'invention, la composition de caoutchouc comprend par exemple de 30 à 100 pce, en particulier de 50 à 100 pce, de préférence 70 à 100 pce, d'élastomère comprenant des fonctions diène conjugué en coupage avec 0 à 70 pce, en particulier de 0 à 50 pce et de préférence 0 à 30 pce, d'un ou plusieurs autres élastomères, tous les élastomères connus de l'homme de l'art étant utilisables.

Selon un autre mode préférentiel de réalisation de l'invention, la composition comporte pour la totalité des 100 pce d'élastomère, un ou plusieurs élastomères comprenant des fonctions diène conjugué.

### I.2. Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice; la silice, lorsqu'elle est présente, est utilisée de préférence à un taux inférieur à 20 pce, plus préférentiellement inférieur à 10 pce (par exemple entre 0,1 et 10 pce). Ce mode de réalisation préférentiel est particulièrement préféré lorsque l'élastomère majoritaire de la composition est un caoutchouc isoprénique époxydé, plus particulièrement du caoutchouc naturel époxydé.

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce). Ce mode de réalisation préférentiel est également particulièrement préféré lorsque l'élastomère majoritaire de la composition est un caoutchouc isoprénique époxydé, plus particulièrement du caoutchouc naturel époxydé.

Pour coupler la charge inorganique renforçante à l'élastomère diénique, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:
(I) Z - A - Sx - A - Z, dans laquelle:
   - x est un entier de 2 à 8 (de préférence de 2 à 5) ;
   - A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
   - Z répond à l'une des formules ci-après: 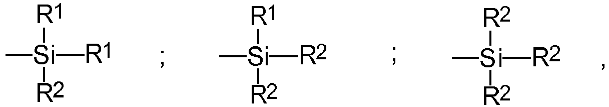 dans lesquelles:
      - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
      - - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### I.3. Poly-diénophile

Au polymère comprenant des fonctions diène conjugué et à la charge renforçante précédemment décrits est associé un système de réticulation, apte à réticuler ou durcir la composition du pneumatique selon l'invention. Ce système de réticulation comprend un (c'est-à-dire au moins un) poly-diénophile de formule générale (I) 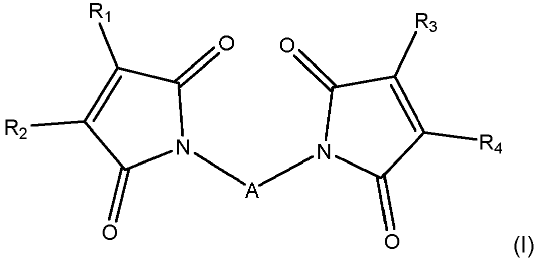 dans laquelle
- A représente une liaison covalente ou un groupement hydrocarboné comportant au moins 1 atome de carbone, éventuellement substitué et éventuellement interrompu par un ou plusieurs hétéroatomes,
- R₁, R₂, R₃ et R₄ représentent indépendamment les uns des autres des groupements identiques ou différents choisis parmi l'atome d'hydrogène et les groupements hydrocarbonés, R₁ et R₂ d'une part et R₃ et R₄ d'autre part pouvant former ensemble avec les atomes de carbone du cycle auxquels ils se rattachent, un cycle.

De préférence dans le poly-diénophile de formule générale (I), A représente une liaison covalente ou un groupement divalent hydrocarboné comportant de 1 à 1800 atomes de carbone, préférentiellement de 2 à 300 atomes de carbone, plus préférentiellement de 2 à 100 atomes de carbone, et de manière très préférentielle de 2 à 50 atomes de carbone. Au-dessus de 1800 atomes de carbone, le poly-diénophile est un agent de réticulation moins performant. Ainsi, A représente de préférence un groupement divalent hydrocarboné comportant de 3 à 50 atomes de carbone, préférentiellement de 5 à 50 atomes de carbone, plus préférentiellement de 8 à 50 atomes de carbone, et encore plus préférentiellement de 10 à 40 atomes de carbone.

Préférentiellement, A est un groupement divalent de type aliphatique, ou aromatique ou un groupement comportant au moins une partie aliphatique et une partie aromatique, et de préférence, un groupement divalent de type aromatique, ou un groupement comportant au moins une partie aliphatique et une partie aromatique. Plus préférentiellement, A est un groupement divalent comportant au moins une partie aliphatique et une partie aromatique de type arylène-dialkylène ou alkylène-diarylène; et notamment, A est préférentiellement un groupement phénylène-dialkylène (tel que phénylène-diméthylène ou phénylène-diéthylène) ou un groupement alkylène-diphénylène (tel que méthylène-diphénylène)

De préférence, lorsque A est interrompu, il l'est par au moins un hétéroatome choisi parmi l'oxygène, l'azote et le soufre, de préférence l'oxygène.

Selon un mode de réalisation préférentiel, A est substitué par au moins un radical choisi parmi les radicaux alkyle, cycloalkylalkyle, aryle, aralkyle, hydroxyle, alkoxy, amino et carbonyle.

Les radicaux R₁, R₂, R₃ et R₄ représentent indépendamment les uns des autres des groupements identiques ou différents choisis parmi l'atome d'hydrogène, les alkyles ayant de 1 à 20 atomes de carbone, les cycloalkyles ayant de 5 à 24 atomes de carbone, les aryles ayant de 6 à 30 atomes de carbone et les aralkyles ayant de 7 à 25 atomes de carbone; groupements qui peuvent éventuellement être interrompus par un ou plusieurs hétéroatomes et/ou substitués, R₁ et R₂ d'une part et R₃ et R₄ d'autre part pouvant former ensemble avec les atomes de carbone du cycle auxquels ils se rattachent, un cycle choisi parmi les cycles aromatiques, hétéroaromatiques ou aliphatiques, comprenant de 5 à 12 atomes de carbone, de préférence 5 ou 6 atomes de carbone. De préférence, R₁, R₂, R₃ et R₄ représentent indépendamment les uns des autres des groupements identiques ou différents choisis parmi l'atome d'hydrogène, et les alkyles linéaires ou ramifiés ayant de 1 à 6 atomes de carbone ; groupements qui peuvent éventuellement être substitué.

Selon un mode de réalisation préféré, A est substitué par un ou plusieurs radicaux de formule (II) et/ou par un ou plusieurs radicaux hydrocarbonés choisi parmi les radicaux alkyle, cycloalkyle, cycloalkylalkyle, aryle, aralkyle, eux-même substitués par une ou plusieurs radicaux de formule (II) 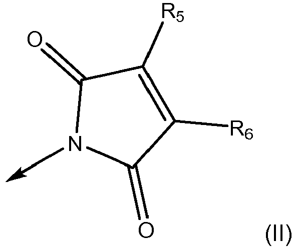 dans lequel la flèche représente le point d'attachement au reste du groupement A ; et R₅ et R₆, représentent indépendamment l'un de l'autre des groupements identiques ou différents choisis parmi l'atome d'hydrogène et les groupements hydrocarbonés, R₅ et R₆ pouvant former ensemble avec les atomes de carbone du cycle auxquels ils se rattachent, un cycle. De préférence, R₅ et R₆ représentent indépendamment l'un de l'autre des groupements identiques ou différents choisis parmi l'atome d'hydrogène, et les alkyles linéaires ou ramifiés ayant de 1 à 6 atomes de carbone.

Selon un mode de réalisation préféré de l'invention également, A ne comporte pas d'autre radical de formule (II) tel que représenté ci-dessus.

De préférence dans la composition comprise dans le pneumatique selon l'invention, le taux de poly-diénophile est compris dans un domaine allant de 0,2 à 100 pce, de préférence de 0,2 à 50 pce. En effet En dessous de 0,2 pce de poly-diénophile, l'effet de la réticulation n'est pas sensible tandis qu'au-delà de 100 pce de poly-diénophile, le poly-diénophile, agent de réticulation, devient majoritaire en poids par rapport à la matrice polymérique. Ainsi, préférentiellement, le taux de poly-diénophile est compris dans un domaine allant de 0,4 à 27 pce, de préférence de 0,9 à 20 pce.

Les poly-diénophiles utiles pour les besoins de l'invention sont soit disponibles dans le commerce, soit facilement préparés par l'homme de l'art selon des techniques bien connues telles que les voies décrites par exemple dans le document Walter W. Wright and Michael Hallden-Abberton "Polyimides" in Ullmann's Encyclopedia of Industrial Chemistry, 2002, Wiley-VCH, Weinheim. doi:10.1002/14356007.a21_253*.*

Par exemple, à titre de poly- diénophiles disponibles dans le commerce et utiles aux besoins de l'invention, on peut citer les bis maléimides, et les bis-citraconimides.

### I.4. Additifs divers

Les compositions de caoutchouc des pneumatiques conformes à l'invention peuvent comporter également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des agents de réticulation autres que ceux précités, des résines renforçantes ou des agents plastifiants. De préférence, cet agent plastifiant est une résine hydrocarbonée solide (ou résine plastifiante), une huile d'extension (ou huile plastifiante), ou un mélange des deux.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

De manière préférentielle, les compositions des pneumatiques de l'invention sont dépourvues de système de réticulation autre que celui décrit précédemment, et qui comporte un poly-diénophile. Dit autrement, le système de réticulation à base d'au moins un poly-diénophile est préférentiellement le seul système de réticulation dans la composition du pneumatique de l'invention. Ainsi, la composition du pneumatique selon l'invention, est dépourvue de soufre moléculaire ou en contient moins de de 0,2 pce. De même la composition est préférentiellement dépourvue de tout accélérateur de vulcanisation, tels qu'ils sont connus de l'homme du métier, ou en contient moins de 1 pce, de préférence moins de 0,5 pce et plus préférentiellement moins de 0,2 pce. De préférence, les compositions des pneumatiques de l'invention sont dépourvues de système de vulcanisation, ou en contiennent moins de 1 pce, de préférence moins de 0,5 pce et plus préférentiellement moins de 0,2 pce.

### I.5. Préparation des compositions de caoutchouc

Les compositions utilisées dans les pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 200°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle peut être incorporé le système de réticulation.

De préférence, pour la mise en œuvre de l'invention, tous les constituants de la composition sont introduits au mélangeur interne, de sorte que l'on peut s'affranchir de l'incorporation d'un système de vulcanisation lors de la phase dite productive ci-dessus. En effet, le système de réticulation des compositions de l'invention permet de travailler le mélange à haute température, ce qui constitue un avantage majeur lors de la préparation des compositions de l'invention par rapport à la préparation des compositions comprenant un système de vulcanisation conventionnel.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication du pneumatique de l'invention.

### I.6. Pneumatique de l'invention

La composition de caoutchouc du pneumatique selon l'invention peut être utilisée dans différentes parties dudit pneumatique, notamment dans le sommet, la zone du bourrelet, la zone du flanc et la bande de roulement (notamment dans la sous-couche de la bande de roulement).

Selon un mode préférentiel de réalisation de l'invention, la composition de caoutchouc précédemment décrite peut être utilisée dans le pneumatique comme une couche élastomère dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Egalement, la composition selon l'invention peut être utilisée dans les nappes du sommet (ceinture de pneumatique) ou dans la zone entre les extrémités des nappes du sommet et la nappe carcasse.

Un autre mode préférentiel de réalisation de l'invention peut être l'utilisation de la composition selon l'invention pour former une couche élastomère disposée dans la zone du flanc du pneumatique.

Alternativement, la composition de l'invention peut avantageusement être utilisée dans la bande roulement du pneumatique.

### II. EXEMPLES DE REALISATION DE L'INVENTION

Les compositions de caoutchouc sont caractérisées après cuisson, comme indiqué ci-après.

### II.1. Essais de traction

Les essais de traction sont effectués conformément à la norme française NF T 46-002 de septembre 1988. On mesure en seconde élongation (c'est-à-dire après accommodation) le module sécant nominal calculé en se ramenant à la section initiale de l'éprouvette (ou contrainte apparente, en MPa, à 50% d'allongement (moyenne déformation) noté MA50, 100% et 300% d'allongement notés respectivement MA100 et MA300. L'indice de renforcement est donné par le rapport entre les valeurs de MA300 et de MA100.

Toutes ces mesures de traction sont effectuées dans les conditions normales de température (23±2°C) et d'hygrométrie (50±5% d'humidité relative), selon la norme française NF T 40-101 (décembre 1979).

Les contraintes à la rupture (en MPa) et les allongements à la rupture (en %) peuvent être mesurés à 23°C ± 2°C, selon la norme NF T 46-002.

### II.2. Préparation des compositions

On prépare au préalable deux élastomères fonctionnalisés (un polyisoprène et un copolymère d'éthylène et de butadiène) portant des groupes fonctionnels diène conjugué anthracène de la manière décrite ci-dessous.

### Polyisoprène (IR) fonctionnalisé anthracène

On incorpore du {[3-(anthracen-9-ylmethoxy)-2,4,6-trimethylphenyl]methylidyne}azane oxide (243 mg, 0,66 mmol), de pureté RMN de 90%mol, à 15g de polyisoprène Natsyn 2200 (ML(1+4) 100°C = 79, unités 3,4= 0.5%, unités trans 1,4= 1,9%, unité cis 1,4= 97,6%, Mw = 1044.103 g/mol, Ip = 3,6) sur un outil à cylindres (mélangeur externe à 30°C). Le mélange est homogénéisé en 15 passes portefeuille. Cette phase de mélangeage est suivie d'un traitement thermique (10min à 120°C) sous presse à 10 bars de pression. L'analyse par RMN 1H a permis de déterminer le taux molaire de greffage (0,25%mol) et le rendement molaire de greffage (83%).

### Copolymère d'éthylène et de butadiène (EBR) fonctionnalisé anthracène

On incorpore du {[3-(anthracen-9-ylmethoxy)-2,4,6-trimethylphenyl]methylidyne}azane oxide (896 mg, 2,44 mmol), de pureté RMN de 90%mol, à 30g de copolymère éthylène-butadiène (contenant 66%mol d'unités éthylène et 34%mol d'unités butadiène ; de Mn = 175000 g/mol et Ip = 1,79) sur un outil à cylindres (mélangeur externe à 30°C). Le mélange est homogénéisé en 15 passes portefeuille. Cette phase de mélangeage est suivie d'un traitement thermique (10min à 110°C) sous presse à 10 bars de pression. L'analyse par RMN 1H a permis de déterminer le taux molaire de greffage (0,29%mol) et le rendement molaire de greffage (97%).

### Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique comprenant des fonctions diène conjugué, la charge renforçante, le poly-diénophile, et les autres additifs. On conduit alors un travail thermomécanique (phase non-productive) en une étape, qui dure au total environ 3 à 4 min, jusqu'à atteindre une température maximale de « tombée » de 160°C.

On récupère le mélange ainsi obtenu, on le refroidit puis les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### Essais

Ces essais illustrent des compositions de caoutchouc qui peuvent être utilisées en particulier en bande roulement du pneumatique de l'invention. Ces compositions présentent une facilité de préparation et une simplicité supérieure à une composition de caoutchouc conventionnelle (vulcanisée au soufre), tout en améliorant également l'indice de renforcement des compositions par rapport aux compositions vulcanisées au soufre.

Pour cela, des compositions de caoutchouc ont été préparées comme indiqué précédemment, dont certaines conformes à l'invention (A1 et B1) et certaines non conformes (témoins A0 et B0) comme indiqué aux tableaux 1 et 3.

Les compositions A0 et B0 sont des compositions vulcanisées (c'est-à-dire réticulées par un système de vulcanisation à base de soufre, conventionnel pour la cuisson des pneumatiques) tandis que les compositions A1 et B1 sont des compositions réticulées par un poly-diénophile, selon l'invention.

Les propriétés des compositions ont été mesurées comme indiqué précédemment et les résultats sont indiqués dans les tableaux 2 et 4.

**Tableau 1**

| | A-0 | A-1 |
|---|---|---|
| Polyisoprène (1) | 100 | - |
| Polyisoprène fonctionnel (2) | - | 100 |
| Silice (3) | 60 | 60 |
| Antioxydant (4) | 3 | 3 |
| Paraffine | 1 | 1 |
| Silane (5) | 4,5 | 4,5 |
| ZnO (6) | 2,7 | - |
| Acide Stéarique (7) | 2,5 | - |
| Soufre | 1,3 | - |
| Accélérateur (8) | 1,6 | - |
| Bis-maléimide (9) | - | 2,5 |

| | | |
|---|---|---|
| (1) Polyisoprène « Natsyn 2200 » de la société Goodyear (2) Polyisoprène (IR) fonctionnalisé anthracène tel que décrit plus haut (3) Silice "Zeosil 1165 MP" de la société Solvay-Rhodia (4) N-1,3-diméthylbutyl-N-phényl-para-phénylènediamine ("Santoflex 6-PPD" société Flexsys) (5) Agent de couplage silane "Si69" société Evonik-Degussa ; (6) Oxyde de zinc (grade industriel - société Umicore) (7) Stéarine ("Pristerene 4931" - société Uniqema) (8) N-cyclohexyl-2-benzothiazyl-sulfénamide ("Santocure CBS" société Flexys). (9) 1,1'-(Methylenedi-4,1-phenylene)bismaleimide de la société Sigma-Aldrich | | |

**Tableau 2**

| | A-0 | A-1 |
|---|---|---|
| MA 50 | 2,09 | 2,04 |
| MA 100 | 1,49 | 1,57 |
| MA 300 | 2,16 | 2,80 |
| MA300/MA100 | 1,45 | 1,78 |

On note dans les compositions de l'invention une plus grande simplicité du mélange, avec moins d'ingrédients que dans les compositions témoins. Par ailleurs, on peut noter que le remplacement du système de vulcanisation classique par un système de réticulation poly-diénophile, tel que prescrit pour l'invention permet d'obtenir une amélioration de l'indice de renforcement par rapport au témoin vulcanisé.

**Tableau 3**

| | B-0 | B-1 |
|---|---|---|
| EBR (1) | 100 | - |
| EBR fonctionnel (2) | - | 100 |
| Silice (3) | 60 | 60 |
| Antioxydant (4) | 3 | 3 |
| Paraffine | 1 | 1 |
| Silane (5) | 4,5 | 4,5 |
| ZnO(6) | 2,7 | - |
| Acide Stéarique (7) | 2,5 | - |
| Soufre | 0,9 | - |
| Accélérateur (8) | 1,1 | - |
| Bis-maléimide (9) | - | 2,5 |

| | | |
|---|---|---|
| (1) Copolymère éthylène-butadiène contenant 66%mol d'unités éthylène et 34%mol d'unités butadiène ; de Mn = 175000 g/mol et Ip = 1,79) (2) Copolymère éthylène-butadiène (EBR) fonctionnalisé anthracène tel que décrit plus haut (3) Silice "Zeosil 1165 MP" de la société Solvay-Rhodia (4) N-1,3-diméthylbutyl-N-phényl-para-phénylènediamine ("Santoflex 6-PPD" société Flexsys) (5) Agent de couplage silane "Si69" société Evonik-Degussa ; (6) Oxyde de zinc (grade industriel - société Umicore) (7) Stéarine ("Pristerene 4931" - société Uniqema) (8) N-cyclohexyl-2-benzothiazyl-sulfénamide ("Santocure CBS" société Flexys). (9) 1,1'-(Methylenedi-4,1-phenylene) bismaleimide de la société Sigma-Aldrich | | |

**Tableau 4**

| | B-0 | B-1 |
|---|---|---|
| MA 50 | 4,62 | 4,39 |
| MA 100 | 3,97 | 3,20 |
| MA 300 | 6,80 | 5,46 |
| MA300/MA100 | 1,71 | 1,71 |

On note dans les compositions de l'invention une plus grande simplicité du mélange, avec moins d'ingrédients que dans les compositions témoins. Par ailleurs, on peut noter que le remplacement du système de vulcanisation classique par un système de réticulation poly-diénophile, tel que prescrit pour l'invention permet d'obtenir un indice de renforcement aussi bon que celui du témoin vulcanisé malgré l'économie des nombreux ingrédients.

## Revendications

1. Pneumatique comportant une composition de caoutchouc à base d'au moins une charge renforçante, un polymère comprenant des fonctions diène conjugué, et un système de réticulation dudit polymère comprenant un poly-diénophile de formule générale (I) 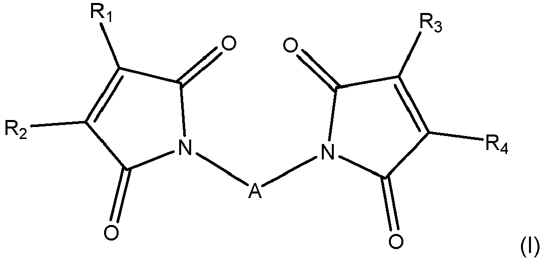 dans laquelle
- A représente une liaison covalente ou un groupement hydrocarboné comportant au moins 1 atome de carbone, éventuellement substitué et éventuellement interrompu par un ou plusieurs hétéroatomes,
- R₁, R₂, R₃ et R₄ représentent indépendamment les uns des autres des groupements identiques ou différents choisis parmi l'atome d'hydrogène et les groupements hydrocarbonés, R₁ et R₂ d'une part et R₃ et R₄ d'autre part pouvant former ensemble avec les atomes de carbone du cycle auxquels ils se rattachent, un cycle.
ladite composition étant dépourvue de soufre moléculaire ou en contenant moins de 0,2 pce.

2. Pneumatique selon la revendication 1 dans lequel A représente une liaison covalente ou un groupement divalent hydrocarboné comportant de 1 à 1800 atomes de carbone, de préférence de 2 à 300 atomes de carbone.

3. Pneumatique selon l'une quelconque des revendications précédentes dans lequel A est un groupement divalent de type aliphatique, ou aromatique ou un groupement comportant au moins une partie aliphatique et une partie aromatique.

4. Pneumatique selon l'une quelconque des revendications précédentes dans lequel A est un groupement phénylène-dialkylène ou un groupement alkylène-diphénylène.

5. Pneumatique selon l'une quelconque des revendications précédentes dans lequel A est interrompu par au moins un hétéroatome choisi parmi l'oxygène, l'azote et le soufre, de préférence l'oxygène.

6. Pneumatique selon l'une quelconque des revendications précédentes dans lequel A est substitué par au moins un radical choisi parmi les radicaux alkyle, cycloalkylalkyle, aryle, aralkyle, hydroxyle, alkoxy, amino et carbonyle.

7. Pneumatique selon l'une quelconque des revendications précédentes, dans lequel R₁, R₂, R₃ et R₄ représentent indépendamment les uns des autres des groupements identiques ou différents choisis parmi l'atome d'hydrogène, les alkyles ayant de 1 à 20 atomes de carbone, les cycloalkyles ayant de 5 à 24 atomes de carbone, les aryles ayant de 6 à 30 atomes de carbone et les aralkyles ayant de 7 à 25 atomes de carbone; groupements qui peuvent éventuellement être interrompus par un ou plusieurs hétéroatomes et/ou substitués, R₁ et R₂ d'une part et R₃ et R₄ d'autre part pouvant former ensemble avec les atomes de carbone du cycle auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

8. Pneumatique selon l'une quelconque des revendications précédentes, dans lequel A est substitué par un ou plusieurs radicaux de formule (II) et/ou par un ou plusieurs radicaux hydrocarbonés choisi parmi les radicaux alkyle, cycloalkyle, cycloalkylalkyle, aryle, aralkyle, eux-même substitués par une ou plusieurs radicaux de formule (II) 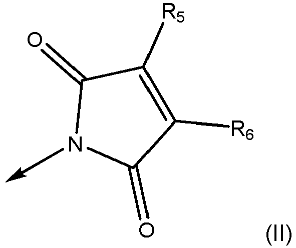 dans lequel :
- la flèche représente le point d'attachement au reste du groupement A,
- R₅ et R₆, représentent indépendamment l'un de l'autre des groupements identiques ou différents choisis parmi l'atome d'hydrogène et les groupements hydrocarbonés, R₅ et R₆ pouvant former ensemble avec les atomes de carbone du cycle auxquels ils se rattachent, un cycle.

9. Pneumatique selon l'une quelconque des revendications 1 à 7, dans lequel le radical A ne comporte pas d'autre radical de formule (II) tel que représenté à la revendication 8.

10. Pneumatique selon l'une quelconque des revendications précédentes, dans lequel le taux de poly-diénophile est compris dans un domaine allant de 0,2 à 100 pce, de préférence de 0,2 à 50 pce.

11. Pneumatique selon l'une quelconque des revendications précédentes, dans lequel le polymère comprenant des fonctions diène conjugué est un élastomère diénique comprenant des fonctions diène conjugué.

12. Pneumatique selon la revendication précédente, dans lequel l'élastomère diénique comprenant des fonctions diène conjugué est choisi dans le groupe constitué par les polyisoprènes, les polybutadiènes, les copolymères de butadiène-styrène (SBR), les copolymères d'éthylène et de butadiène (EBR).

13. Pneumatique selon l'une quelconque des revendications précédentes, dans lequel le polymère comprenant des fonctions diène conjugué comprend des fonctions diène conjugué choisies dans le groupe constitué par les furanes, les anthracènes, les cyclopentadiènes, les pyrroles et les thiophènes, et de préférence dans le groupe constitué par le furane, l'anthracène, le cyclopentadiène et le fulvène.

14. Pneumatique selon l'une quelconque des revendications précédentes, dans lequel le polymère comprenant des fonctions diène conjugué représente de 50 à 100 pce, préférentiellement de 70 à 100 pce.

15. Pneumatique selon l'une quelconque des revendications précédentes, comprenant la composition de caoutchouc à base d'au moins une charge renforçante, un polymère comprenant des fonctions diène conjugué, et un système de réticulation dudit polymère comprenant un poly-diénophile de formule générale (I) dans lequel le système de réticulation à base d'au moins un poly-diénophile est le seul système de réticulation dans ladite composition.

## Patentansprüche

1. Reifen, umfassend eine Kautschukzusammensetzung auf Basis von mindestens einem verstärkenden Füllstoff, einem Polymer mit konjugierten Dienfunktionen und einem Vernetzungssystem, wobei das Polymer ein Polydienophil der allgemeinen Formel (I) 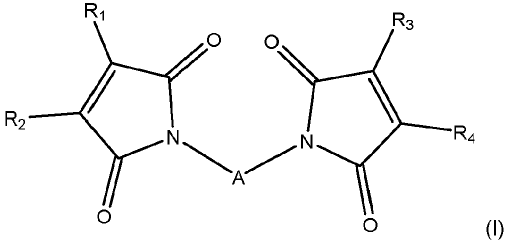 umfasst, wobei
- A für eine kovalente Bindung oder eine Kohlenwasserstoffgruppe mit mindestens 1 Kohlenstoffatom, die gegebenenfalls substituiert und gegebenenfalls durch ein oder mehrere Heteroatome unterbrochen ist, steht,
- R₁, R₂, R₃ und R₄ unabhängig voneinander für gleiche oder verschiedene Gruppen stehen, die aus dem Wasserstoffatom und Kohlenwasserstoffgruppen ausgewählt sind, wobei R₁ und R₂ einerseits und R₃ und R₄ andererseits zusammen mit den Kohlenstoffatomen des Rings, an den sie gebunden sind, einen Ring bilden können,
wobei die Zusammensetzung frei von molekularem Schwefel ist oder weniger als 0,2 phe davon enthält.

2. Reifen nach Anspruch 1, wobei A für eine kovalente Bindung oder eine zweiwertige Kohlenwasserstoffgruppe mit 1 bis 1800 Kohlenstoffatomen, vorzugsweise 2 bis 300 Kohlenstoffatomen, steht.

3. Reifen nach einem der vorhergehenden Ansprüche, wobei A für eine zweiwertige Gruppe vom aliphatischen oder aromatischen Typ oder eine Gruppe mit mindestens einem aliphatischen Teil und einem aromatischen Teil steht.

4. Reifen nach einem der vorhergehenden Ansprüche, wobei A für eine Phenylendialkylen- oder Alkylendiphenylengruppe steht.

5. Reifen nach einem der vorhergehenden Ansprüche, wobei A durch mindestens ein Heteroatom, das aus Sauerstoff, Stickstoff und Schwefel ausgewählt ist, vorzugsweise Sauerstoff, unterbrochen ist.

6. Reifen nach einem der vorhergehenden Ansprüche, wobei A durch mindestens einen Rest, der aus Alkyl-, Cycloalkylalkyl-, Aryl-, Aralkyl-, Hydroxyl-, Alkoxy-, Amino- und Carbonylresten ausgewählt ist, substituiert ist.

7. Reifen nach einem der vorhergehenden Ansprüche, wobei R₁, R₂, R₃ und R₄ unabhängig voneinander für gleiche oder verschiedene Gruppen stehen, die aus dem Wasserstoffatom, Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen und Aralkylgruppen mit 7 bis 25 Kohlenstoffatomen ausgewählt sind, wobei die Gruppen gegebenenfalls durch ein oder mehrere Heteroatome unterbrochen und/oder substituiert sein können, wobei R₁ und R₂ einerseits und R₃ und R₄ andererseits zusammen mit den Kohlenstoffatomen des Rings, an den sie gebunden sind, einen Ring bilden können, der aus aromatischen, heteroaromatischen oder aliphatischen Ringen mit 5 bis 12 Kohlenstoffatomen, vorzugsweise 5 oder 6 Kohlenstoffatomen, ausgewählt ist.

8. Reifen nach einem der vorhergehenden Ansprüche, wobei A durch einen oder mehrere Reste der Formel (II) und/oder durch einen oder mehrere Kohlenwasserstoffreste, die aus Alkyl-, Cycloalkyl-, Cycloalkylalkyl-, Aryl- und Alkylresten, die selbst durch einen oder mehrere Reste der Formel (II) substituiert sind, ausgewählt sind, substituiert ist: 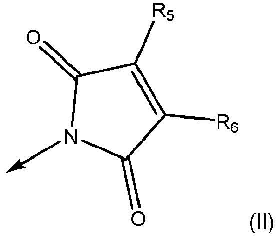 wobei:
- der Pfeil den Verknüpfungspunkt mit dem Rest der Gruppe A darstellt,
- R₅ und R₆ unabhängig voneinander für gleiche oder verschiedene Gruppen stehen, die aus dem Wasserstoffatom und Kohlenwasserstoffgruppen ausgewählt sind, wobei R₅ und R₆ zusammen mit den Kohlenstoffatomen des Rings, an den sie gebunden sind, einen Ring bilden können.

9. Reifen nach einem der Ansprüche 1 bis 7, wobei der Rest A keinen anderen Rest der Formel (II) gemäß Anspruch 8 umfasst.

10. Reifen nach einem der vorhergehenden Ansprüche, wobei der Gehalt an Polydienophil in einem Bereich von 0,2 bis 100 phe, vorzugsweise von 0,2 bis 50 phe, liegt.

11. Reifen nach einem der vorhergehenden Ansprüche, wobei es sich bei dem Polymer mit konjugierten Dienfunktionen um ein Dienelastomer mit konjugierten Dienfunktionen handelt.

12. Reifen nach dem vorhergehenden Anspruch, wobei das Dienelastomer mit konjugierten Dienfunktionen aus der Gruppe bestehend aus Polyisoprenen, Polybutadienen, Butadien/Styrol-Copolymeren (SBR) und Copolymeren von Ethylen und Butadien (EBR) ausgewählt ist.

13. Reifen nach dem vorhergehenden Anspruch, wobei das Dienelastomer mit konjugierten Dienfunktionen aus der Gruppe bestehend aus Furanen, Anthracenen, Cyclopentadienen, Pyrrolen und Thiophenen und vorzugsweise aus der Gruppe bestehend aus Furan, Anthracen, Cyclopentadien und Fulven ausgewählt ist.

14. Reifen nach einem der vorhergehenden Ansprüche, wobei das Polymer mit konjugierten Dienfunktionen 50 bis 100 phe, vorzugsweise 70 bis 100 phe, ausmacht.

15. Reifen nach einem der vorhergehenden Ansprüche, umfassend die Kautschukzusammensetzung auf Basis von mindestens einem verstärkenden Füllstoff, einem Polymer mit konjugierten Dienfunktionen und einem Vernetzungssystem, wobei das Polymer ein Polydienophil der allgemeinen Formel (I) umfasst, wobei es sich bei dem Vernetzungssystem auf Basis von mindestens einem Polydienophil um das einzige Vernetzungssystem in der Zusammensetzung handelt.

## Claims

1. Tyre comprising a rubber composition based on at least a reinforcing filler, a polymer comprising conjugated diene functions and a system for crosslinking said polymer comprising a polydienophile of general formula (I): 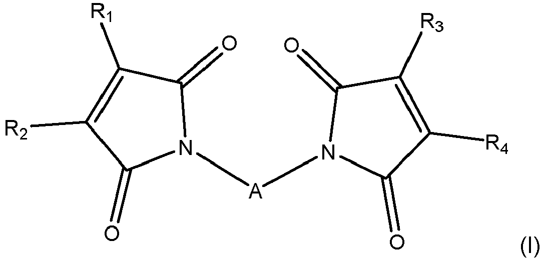 in which:
- A represents a covalent bond or a hydrocarbon-based group comprising at least 1 carbon atom, which is optionally substituted and optionally interrupted by one or more heteroatoms,
- R₁, R₂, R₃ and R₄ independently represent identical or different groups chosen from the hydrogen atom and hydrocarbon-based groups, R₁ and R₂ on the one hand and R₃ and R₄ on the other hand possibly forming, together with the carbon atoms of the ring to which they are attached, a ring.
the composition being devoid of molecular sulfur or contains less than 0.2 phr thereof.

2. Tyre according to Claim 1, in which A represents a covalent bond or a divalent hydrocarbon-based group comprising from 1 to 1800 carbon atoms and preferably from 2 to 300 carbon atoms.

3. Tyre according to any one of the preceding claims, in which A is a divalent group of aliphatic or aromatic type or a group comprising at least an aliphatic portion and an aromatic portion.

4. Tyre according to any one of the preceding claims, in which A is a phenylene-dialkylene group or an alkylene-diphenylene group.

5. Tyre according to any one of the preceding claims, in which A is interrupted by at least one heteroatom chosen from oxygen, nitrogen and sulfur, preferably oxygen.

6. Tyre according to any one of the preceding claims, in which A is substituted by at least one radical chosen from alkyl, cycloalkylalkyl, aryl, aralkyl, hydroxyl, alkoxy, amino and carbonyl radicals.

7. Tyre according to any one of the preceding claims, in which R₁, R₂, R₃ and R₄ independently represent identical or different groups chosen from the hydrogen atom, alkyls having from 1 to 20 carbon atoms, cycloalkyls having from 5 to 24 carbon atoms, aryls having from 6 to 30 carbon atoms and aralkyls having from 7 to 25 carbon atoms; groups which may optionally be interrupted by one or more heteroatoms and/or substituted, R₁ and R₂ on the one hand and R₃ and R₄ on the other hand possibly forming, together with the carbon atoms of the ring to which they are attached, a ring chosen from aromatic, heteroaromatic or aliphatic rings comprising from 5 to 12 carbon atoms, preferably 5 or 6 carbon atoms.

8. Tyre according to any one of the preceding claims, in which A is substituted by one or more radicals of formula (II) and/or by one or more hydrocarbon-based radicals chosen from alkyl, cycloalkyl, cycloalkylalkyl, aryl or aralkyl radicals, themselves substituted by one or more radicals of formula (II): 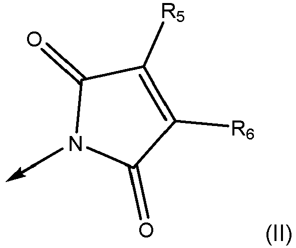 in which:
- the arrow represents the point of attachment to the rest of the group A,
- R₅ and R₆ independently represent identical or different groups chosen from the hydrogen atom and hydrocarbon-based groups, R₅ and R₆ possibly forming, together with the carbon atoms of the ring to which they are attached, a ring.

9. Tyre according to any one of Claims 1 to 7, in which the radical A does not comprise other radicals of formula (II) as represented in Claim 8.

10. Tyre according to any one of the preceding claims, in which the content of polydienophile is within a range extending from 0.2 to 100 phr and preferably from 0.2 to 50 phr.

11. Tyre according to any one of the preceding claims, in which the polymer comprising conjugated diene functions is a diene elastomer comprising conjugated diene functions.

12. Tyre according to the preceding claim, in which the diene elastomer comprising conjugated diene functions is selected from the group consisting of polyisoprenes, polybutadienes, butadiene/styrene copolymers (SBRs) and ethylene/butadiene copolymers (EBRs).

13. Tyre according to any one of the preceding claims, in which the polymer comprising conjugated diene functions comprises conjugated diene functions selected from the group consisting of furans, anthracenes, cyclopentadienes, pyrroles and thiophenes, and preferably from the group consisting of furan, anthracene, cyclopentadiene and fulvene.

14. Tyre according to any one of the preceding claims, in which the polymer comprising conjugated diene functions represents from 50 to 100 phr and preferentially from 70 to 100 phr.

15. Tyre according to any one of the preceding claims, comprising the rubber composition based on at least a reinforcing filler, a polymer comprising conjugated diene functions and a system for crosslinking said polymer comprising a polydienophile of general formula (I), in which the crosslinking system based on at least one polydienophile is the only crosslinking system in said composition.
